# EUROPEAN PATENT SPECIFICATION

(11) **EP 3 954 922 B1**
(45) Date of publication and mention of the grant of the patent: **18.12.2024**
(21) Application number: 21190553.4
(22) Date of filing: 10.08.2021
(51) Int. Cl.: F16D 65/847, F16D 55/36

(54) **SYSTEM AND METHOD FOR REDUCING TEMPERATURE OF A BRAKING ASSEMBLY**
SYSTEM UND VERFAHREN ZUR REDUZIERUNG DER TEMPERATUR EINER BREMSANORDNUNG
SYSTÈME ET PROCÉDÉ DE RÉDUCTION DE LA TEMPÉRATURE D'UN ENSEMBLE DE FREINAGE

(30) Priority: 10.08.2020 IN 202041034291; 16.12.2020 US 202017123971
(43) Date of publication of application: 16.02.2022
(73) Proprietor: Goodrich Corporation, Charlotte, NC 28217-4578 (US)
(72) Inventor: NAGARAJA, Hemanth, 573201 Hassan (IN); JAIN, Bhuwan, Mississauga, L5N 8J6 (CA); BODKI, Basavaraj, 560037 Bangalore (IN)
(74) Representative: Dehns

(56) References cited:
- WO-A1-2013/123993
- WO-A1-2017/121741
- WO-A1-2020/074805
- WO-A1-97/47520

## Description

### CROSS-REFERENCE TO RELATED APPLICATIONS

This application claims priority to, and the benefit of, Indian Patent Application No. 202041034291, filed August 10, 2020 and titled "SYSTEMS AND METHODS FOR REDUCING TEMPERATURE OF A BRAKING ASSEMBLY."

### FIELD

The present invention relates to systems and methods for cooling braking assemblies, and more specifically to extending the useable life of braking assemblies.

### BACKGROUND

Aircraft brake systems typically employ a series of friction disks forced into contact with each other to stop the aircraft. Friction disks splined to a non-rotating wheel axle are interspersed with friction disks splined to the rotating wheel. In response to these interleaved friction disks being pressed together during a braking actuation, significant heat is generated. Due to these high temperatures, friction disks (or at least wear surfaces thereof) are often constructed from carbon-carbon composite materials and/or steel materials. While such materials are generally able to withstand the heat, the elevated temperatures of a braking action may cause the friction disks (and other parts of the braking assembly) to undergo oxidation or to otherwise experience elevated temperature damage, which adversely affects the useable life of the friction disks. WO 2020/074805 A1 describes a system and method for cooling the brakes of a landing gear of an aircraft. WO 2013/123993 A1 describes a drive unit for an aircraft landing gear with integrated cooling.

### SUMMARY

A system for reducing a temperature of a braking assembly is defined in claim 1. The system may include the braking assembly of a wheel assembly, an airflow amplifier, and a conduit. The braking assembly may include a plurality of friction disks. The airflow amplifier may be coupled to the wheel assembly, and the conduit may extend from a compressed gas source to the airflow amplifier. Generally, the airflow amplifier is configured to entrain ambient air ("entrained air") in response to compressed gas from the compressed gas source flowing to the airflow amplifier via the conduit, according to various embodiments. The airflow amplifier may be configured to direct the entrained air and the compressed gas to the braking assembly to reduce the temperature of the braking assembly.

In various embodiments, the airflow amplifier is mounted to a rim of a wheel of the wheel assembly. In various embodiments, the airflow amplifier is a first airflow amplifier of a plurality of airflow amplifiers mounted to the rim of the wheel of the wheel assembly. In various embodiments, plurality of airflow amplifiers are circumferentially distributed around the rim of the wheel of the wheel assembly. The plurality of airflow amplifiers may be coupled to the same compressed gas source. The conduit may extend from a non-rotating structure of the wheel assembly to the rotating rim, and thus the conduit may include a bearing and dynamic seal at an interface between the non-rotating structure and the rim. In various embodiments, the system further includes a mounting plate to which the plurality of airflow amplifiers are directly mounted, wherein the mounting plate is mounted to the rim. The mounting plate may comprise radially extending channels that form part of the conduit.

In various embodiments, the airflow amplifier comprises an air inlet, a compressed gas inlet, and an outlet. The airflow amplifier may define a central chamber extending from the air inlet to the outlet, wherein the compressed gas inlet comprises an annular nozzle for delivering the compressed gas to the central chamber. The airflow amplifier may be coupled to the wheel assembly in such a manner so as to allow additional airflow around an exterior surface of the airflow amplifier to be entrained by exhaust flow from the outlet.

The compressed gas source may be mounted to a landing gear for the wheel assembly, such as an arm of the landing gear. The airflow amplifier may be entirely disposed within a cavity defined by a wheel bay of the wheel assembly.

Also disclosed herein, is an aircraft as defined in claim 12.

The aircraft may further include a controller coupled in electronic control communication with at least one of the compressed gas source and a valve of the conduit to control flow of compressed gas to the plurality of airflow amplifiers. The controller may be configured to determine at least one of an actual status and an expected status of the braking assembly and to actuate the flow of the compressed gas to the plurality of airflow amplifiers in response to at least one of the actual status and the expected status of the braking assembly.

Also disclosed herein, according to various embodiments, is a method for reducing a temperature of a braking assembly of an aircraft. The method may include determining, by a processor, at least one of an actual status and an expected status of the braking assembly, wherein the actual status and expected status pertains to the temperature of the braking assembly. The method may also include, based on at least one of the actual status and the expected status of the braking assembly, actuating, by the processor, flow of compressed gas to at least one airflow amplifier mounted to a rim of a wheel of the aircraft to direct entrained air and compressed gas to the braking assembly to reduce the temperature of the braking assembly. Actuating the flow may include maintaining the flow of the compressed gas until the temperature of the braking assembly reaches a predetermined temperature.

The forgoing features and elements as well as the operation of the disclosed embodiments will become more apparent in light of the following description and accompanying drawings.

### BRIEF DESCRIPTION OF THE DRAWINGS

FIG. 1 illustrates an aircraft, in accordance with various embodiments;
FIG. 2 illustrates a cross-sectional view of a multi-disk brake system, in accordance with various embodiments;
FIG. 3 illustrates a cross-sectional view of a system for reducing a temperature of a braking assembly, in accordance with various embodiments;
FIG. 4 illustrates a cross-sectional view of an airflow amplifier, in accordance with various embodiments;
FIG. 5 illustrates a cross-sectional view of an airflow amplifier relative to a hole in a rim of a wheel assembly, in accordance with various embodiments;
FIG. 6 is a schematic block diagram of a system for reducing a temperature of a braking assembly, in accordance with various embodiments; and
FIG. 7 is a schematic flow chart diagram of a method for reducing a temperature of a braking assembly, in accordance with various embodiments.

The subject matter of the present invention is particularly pointed out and distinctly claimed in the concluding portion of the specification. A more complete understanding of the present invention, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the invention, it should be understood that other embodiments may be realized and that logical changes and adaptations in design and construction may be made in accordance with this disclosure and the teachings herein without departing from the scope of the invention. Thus, the detailed description herein is presented for purposes of illustration only and not of limitation.

Disclosed herein, according to various embodiments, are systems and methods for reducing a temperature of braking assembly (e.g., friction disks of a braking assembly). By reducing the temperature of the components of the braking assembly, oxidation and/or damage to the various components, such as the friction disks, may be inhibited, thereby improving the lifetime of such components. Generally, the systems and methods disclosed herein include utilizing airflow amplifier(s) to increase the flow of cooling gas/air to the braking assembly to lower the temperature of the friction disks of the braking assembly. While numerous details and examples are included herein pertaining to lowering the temperature of (e.g., reducing oxidation of) friction disks of aircraft braking assemblies, the scope of the present invention is not necessarily limited to aircraft implementations, and thus the present invention may be utilized to reduce oxidation of friction components in other applications.

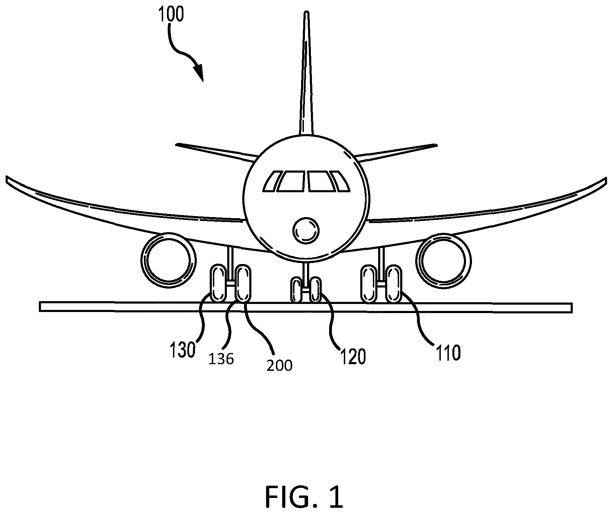

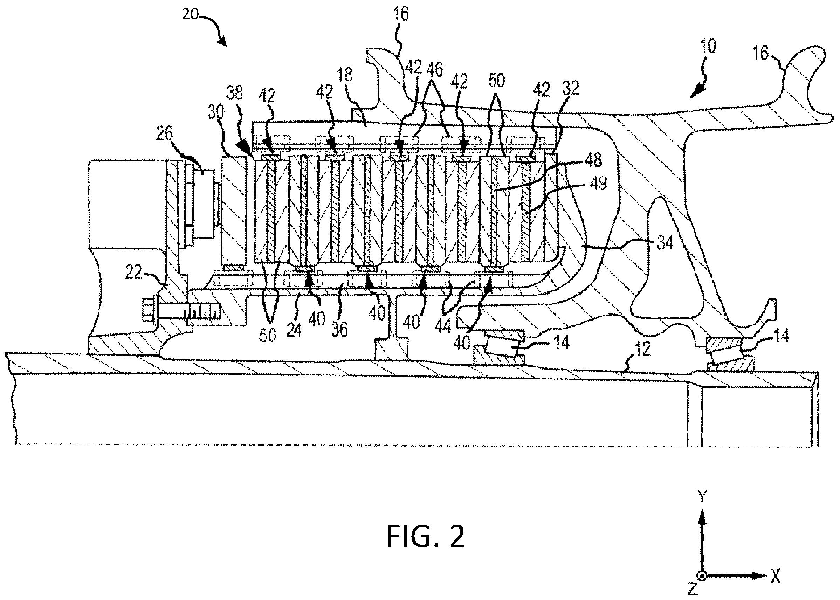

In various embodiments, and with reference to FIG. 1, an aircraft 100 is provided. The aircraft 100 may include multiple landing gear, such as a first landing gear 110, a second landing gear 120 and a third landing gear 130. The landing gear may include one or more wheel assemblies 200 (FIG. 1). For example, the third landing gear 130 may include an inner/inboard wheel assembly and an outer/outboard wheel assembly. The aircraft may also include one or more braking assemblies at each wheel assembly. The braking assembly, as described in greater detail below with reference to FIG. 2, may generally include a plurality of interleaved friction disks that may be actuated to exert a braking force to decelerate and/or stop the aircraft 100. Each wheel assembly of the aircraft 100 may be designed to receive a tire. For example, a tire 136 may be placed about an outer circumference of wheel assembly 200.

Referring to FIG. 2, a multi-disk braking assembly 20 is illustrated according to various embodiments. The braking assembly may be operatively mounted to the wheel assembly/landing gear of the aircraft 100. The braking assembly 20 may include a wheel 10 supported for rotation around axle 12 by bearings 14. Axle 12 defines an axis of multi-disk braking assembly 20 and the various components thereof described herein, and any reference to the terms axis and axial may include an axis of rotation defined by axle 12 or a dimension parallel to such axis. Wheel 10 includes rims 16 for supporting a tire, and a series of axially extending rotor splines 18 (one shown). Rotation of wheel 10 is modulated by multi-disk braking assembly 20. Multi-disk braking assembly 20 includes torque flange 22, torque tube 24, a plurality of pistons 26 (one shown), pressure plate 30, and end plate 32. Torque tube 24 may be an elongated annular structure that includes reaction plate 34 and a series of axially extending stator splines 36 (one shown). Reaction plate 34 and stator splines 36 may be integral with torque tube 24, as shown in FIG. 2, or attached as separate components.

Multi-disk braking assembly 20 also includes a plurality of friction disks 38. Each friction disk 38 may comprise a friction disk core. The plurality of friction disks 38 includes at least one friction disk with a non-rotatable core, also known as a stator 40, and at least one friction disk with a rotatable core, also known as a rotor 42. Stators 40 and rotors 42 may be located adjacent to one another in multi-disk braking assembly 20, forming a plurality of adjacent stator-rotor pairs. Stators 40 may comprise a stator core 48 and wear liners 50. Rotors 42 may comprise a rotor core 49 and wear liners 50. Each friction disk 38 includes an attachment structure. In various embodiments, each of the stators 40 includes a plurality of stator lugs 44 at circumferentially spaced positions around stator 40 as an attachment structure. Similarly, each of the five rotors 42 includes a plurality of rotor lugs 46 at circumferentially spaced positions around rotor 42 as an attachment structure. In various embodiments, pressure plate 30, end plate 32, and friction disks 38 are all annular structures made at least partially from a carbon composite material.

Torque flange 22 may be mounted to axle 12. Torque tube 24 is bolted to torque flange 22 such that reaction plate 34 is near an axial center of wheel 10. End plate 32 is connected to a surface of reaction plate 34 facing axially inward. Thus, end plate 32 is non-rotatable by virtue of its connection to torque tube 24. Stator splines 36 support pressure plate 30 so that pressure plate 30 is also non-rotatable. Stator splines 36 also support stators 40 via stator cores 48. Stator cores 48 engage stator splines 36 with gaps formed between stator lugs 44. Similarly, rotors 42 engage rotor splines 18 via rotor core 49 with gaps formed between rotor lugs 46. Thus, rotor cores 49 of rotors 42 are rotatable by virtue of their engagement with rotor splines 18 of wheel 10.

As shown in FIG. 2, rotors 42 with rotor cores 49 are arranged with end plate 32 on one end, pressure plate 30 on the other end, and stators 40 with stator cores 48 interleaved so that rotors 42 with rotor cores 49 are directly or indirectly adjacent to non-rotatable friction components. Pistons 26 are connected to torque flange 22 at circumferentially spaced positions around torque flange 22. Pistons 26 face axially toward wheel 10 and contact a side of pressure plate 30 opposite friction disks 38. Pistons 26 may be powered electrically, hydraulically, or pneumatically. In various embodiments, the torque tube 24 and/or torque flange 22 is secured to a static (non-rotating) structure, such as a bogie beam or a landing gear strut.

In various embodiments, in response to actuation of pistons 26, a force, towards reaction plate 34, is exerted on the rotatable friction disks 42 and the non-rotatable friction disks 40. The rotatable friction disks 42 and the non-rotatable friction disks 40 may thus be pressed together between pressure plate 30 and end plate 32. This compression of the friction disks during a braking action often generates substantial heat. While frictions disks, or at least wear liners of friction disks, may be made from a material that is capable of withstanding the heat, such as carbon-carbon composite materials or steel materials, the elevated temperature of the friction disks may render the disks susceptible to oxidation or other forms of temperature damage, which would reduce the useable life of the friction disks. Accordingly, the system and methods described below are configured to reduce the temperature of the braking assembly during, after, before, and/or between brake usage.

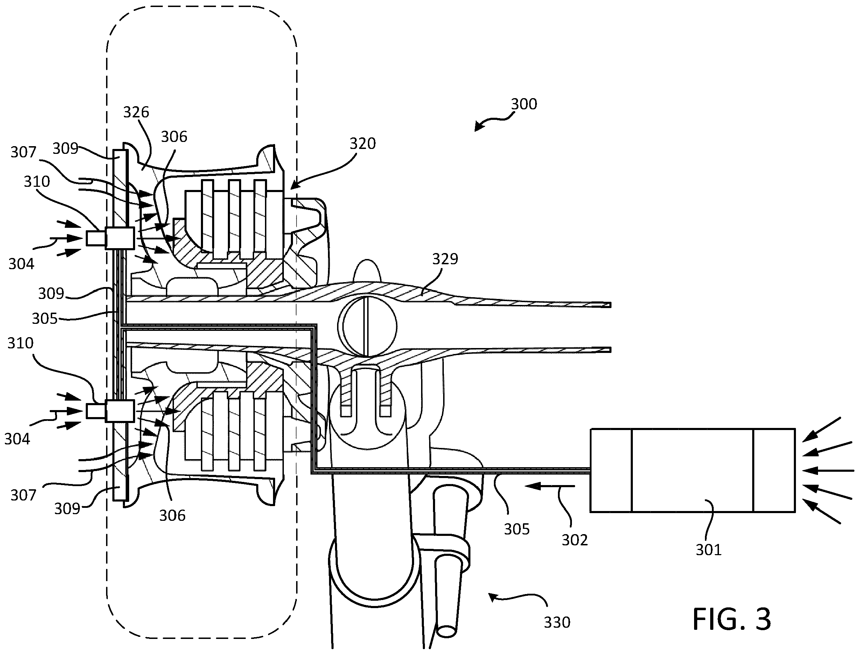

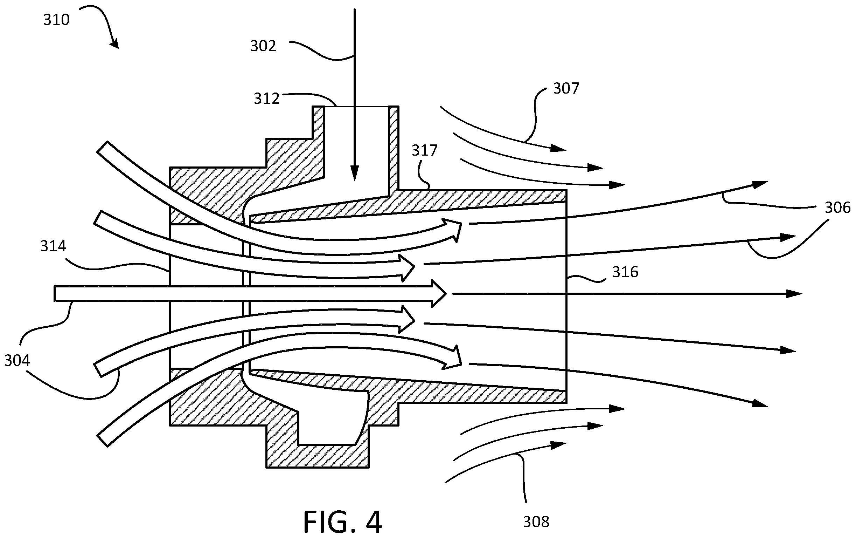

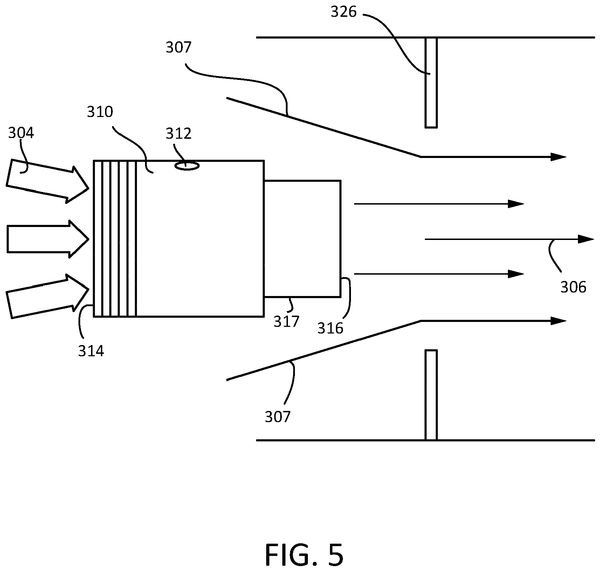

In various embodiments, and with reference to FIG. 3, a system 300 for reducing a temperature of a braking assembly 320 is provided. The system 300 may include a braking assembly 320 (e.g., braking assembly 20 of FIG. 2) and a conduit 305 configured to direct compressed gas 302 (note the arrow representing the flow of compressed gas is shown outside the conduit 305, though the flow is actually within the conduit 305) from a compressed gas source 301 to an airflow amplifier 310 (or a plurality of airflow amplifiers). The airflow amplifier(s) 310 is coupled to the wheel assembly, such as the rim 326 of one of the wheels, according to various embodiments. The airflow amplifier(s) 310 is generally configured to entrain ambient air (referred to herein as "entrained air 304") in response to the compressed gas 302 flowing to/through the airflow amplifier 310, according to various embodiments. In accordance with various embodiments, the airflow amplifier 310 is configured to direct a combined stream 306 of the entrained air 304 and the compressed gas 302 to the braking assembly 320, thereby augmenting convective cooling in the braking assembly 320 (e.g., around the friction disks) to reduce the temperature of the braking assembly 320. The reduced temperature may mitigate oxidation of the braking assembly 320. Additional details pertaining to the structure of the airflow amplifier(s) 310 are included below with reference to FIGS. 4 and 5.

The compressed gas source 301, the conduit 305, and the airflow amplifiers 310 are shown schematically in FIG. 3, and thus the routing, position, size, and/or orientation of the compressed gas source 301, the conduit 305, and the airflow amplifiers 310, relative to each other and/or relative to other components of the system 300, is not to be limited to the depiction in FIG 3. In various embodiments, the airflow amplifier 310 is mounted to a rim 326 of a wheel of the wheel assembly. The airflow amplifier 310 may be at least partially positioned within a hole/aperture of the rim 326, thus allowing the combined stream 306 to pass through the rim 326 to the braking assembly 320. For example, the airflow amplifier 310 may be configured to specifically direct the combined stream at one or more friction disks.

In various embodiments, the system 300 includes a plurality of airflow amplifiers 310 mounted to the rim 326. The plurality of airflow amplifiers 310 may be circumferentially distributed around the rim 326 to more uniformly distribute the cooling convective airflow around the braking assembly 320. In various embodiments, each airflow amplifier of the plurality of airflow amplifiers 310 may be specifically directed at a certain region/portion of the braking assembly. For example, a first airflow amplifier may be directed at an outboard-most friction disk (or set of outboard-most friction disks) while a second airflow amplifier may be directed at an adjacent friction disk (or set of friction disks) and so on, thus allowing for the entire stack of friction disks to be convectively cooled. In various embodiments, multiple airflow amplifiers 310 are fluidly coupled (via the conduit 305) to the same compressed gas source 301. Said differently, a single compressed gas source can be used to supply compressed gas to multiple airflow amplifiers. For example, there may be between 2 and 12 airflow amplifiers in various embodiments, or more, that are supplied with compressed gas from the same compressed gas source. In various embodiments, the system 300 may include multiple conduits respectively from multiple compressed gas sources, with each conduit feeding a set of airflow amplifiers.

In various embodiments, the conduit 305 extends from a non-rotating structure (e.g., an axle 329, a bogue axle, a landing gear 330, etc.) of the aircraft to a rotating structure of the aircraft (e.g., the rim 326). Thus, the conduit 305 may include a bearing and dynamic seal at an interface between the non-rotating structure and the rotating structure. For example, the conduit interface between the non-rotating structure and the rotating structure may include a rotary union joint that facilitate fluid transfer to rotating components. In various embodiments, the compressed gas source 301, may be mounted to landing gear or some other non-rotating structure. In various embodiments, the compressed gas source may be a tank of compressed gas, or a solid state material that generates gas via chemical reaction or some other mechanism.

In various embodiments, the compressed gas source 301 may be an inert fluid source. That is, while the compressed gas may be air, in other embodiments the compressed gas may be nitrogen gas or other conventional inert fluids, such as helium, neon, argon. For example, the compressed gas may be a nitrogen-enriched air stream comprising less than 20 volume % of oxygen. In various embodiments, the compressed gas has a volume percent of oxygen of less than 15%. In various embodiments, the oxygen content in the compressed is less than 10 volume percent.

In various embodiments, the system 300 may include a mounting plate 309 to which the airflow amplifiers 310 are directly mounted. The mounting plate 309 may be a circular plate or the mounting plate may be an annular plate having radially extending sections. The mounting plate may define portions of the conduit 305, such as radially extending channels, that facilitate delivery of the compressed gas to each of the airflow amplifiers 310. The mounting plate 309 may be generally configured to allow for the airflow amplifiers 310 to be easily affixed to the rim/wheel via the mounting plate 309. That is, instead of individually mounting each airflow amplifier 310 to the wheel/rim, the airflow amplifiers 310 may be directly affixed to the mounting plate 309, and the mounting plate 309 may be affixed to the wheel/rim. In various embodiments, the airflow amplifier 310 are entirely disposed within a cavity defined by a wheel bay of the wheel assembly. Said differently, the size and mounting configuration of airflow amplifiers 310 may be selected such that the outboard end of each airflow amplifier does not extend beyond the protective volume of the wheel bay.

In various embodiments, instead of the mounting plate being coupled to the rotating wheel/rim, the mounting plate may be directly mounted to the axle. For example, the mounting plate may be retained/secured outboard of the wheel (e.g., by an axle nut or the like). In such a configuration, the non-rotating mounting plate may be positioned so as to have sufficient clearance from the rotating wheel.

In various embodiments, and with reference to FIG. 4, each airflow amplifier 310 may be a throttled ring-type amplifier that utilizes the "Coand 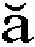 effect" to induce ambient airflow. That is, each airflow amplifier 310 may comprise an inlet side (e.g., an air inlet 314), a compressed gas inlet 312, and an outlet side (e.g., an outlet 316 or an exhaust end). The airflow amplifier 310 may define a central chamber extending from the air inlet 314 to the outlet 316, and the compressed gas inlet 312 may be a port in fluid receiving communication with the conduit 305 that delivers the compressed gas 302 to an annular chamber defined in the airflow amplifier 310. The airflow amplifier may include an annular nozzle (e.g., a ring nozzle) for delivering the compressed gas from the annular chamber into the central chamber. Due to the "Coand 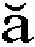 effect," the compressed gas stays attached to the inner surface of the central chamber as the compressed gas flows toward the outlet 316. The movement of the compressed gas along the interior walls of the central chamber creates a vacuum that induces/entrains ambient air (i.e., the entrained air 304) into the central chamber through the air inlet 314, thus utilizing the pressurized compressed gas to entrain a large flow volume of air to facilitate with the convective cooling of the braking assembly. That is, because of the air entrainment, the total flow rate (i.e., the total mass/molar flow rate of fluid) that is delivered to the braking assembly for cooling purposes is greater than would be possible if only the compressed gas source was utilized. In various embodiments, and as described in more detail with reference to FIG. 5, the airflow amplifier 310 may also entrain additional airflow 307 around the exterior surface 317 of the airflow amplifier by the flow velocity of the combined stream 306 (e.g., the exhaust flow) emitted from the outlet 316.

In various embodiments, the airflow amplifier 310 is a non-electric component. In various embodiments, the airflow amplifier is passive and has no internal moving parts. Accordingly, the weight and overall sound level of these airflow amplifier(s) may be less than pumps, fans, or other air movers that use impellers or other mechanical means. For example, the sound level of the airflow amplifier during operation may be less than 90 dBa, or even less than 80 dBa. The airflow amplifier may be made from a metallic material, such as stainless steel and/or aluminum.

As mentioned above, the size, capacity, and number of airflow amplifiers may be selected according to the cooling needs of a specific braking assembly/wheel assembly. In various embodiments, each airflow amplifier may provide an amplification ratio (defined as inlet flow rate compared to the combined outlet flow rate) of between 1:15 and 1 :35. That is, the volumetric flow rate of the combined stream 306 (including any additional airflow 307) may be between 15 and 35 times the volumetric flow rate of the compressed gas 302 flowing into the airflow amplifier. This amplification ratio depends on various factors, such as whether the airflow amplifier is mounted in a ducted or un-ducted configuration (see below with reference to FIG. 5). In various embodiments, the cumulative volumetric flow rate of the combined streams from the plurality of airflow amplifiers is between 200 liters per second (~420 SCFM) to 600 liters per second (~1270 SCFM). These cumulative flow rate numbers may be achieved, for example, by a single air compressor coupled to four (4) airflow amplifiers, according to various embodiments.

In various embodiments, and with reference to FIG. 5, the airflow amplifier 310 may be coupled to wheel assembly in such a manner so as to allow additional airflow 307 around the exterior surface 317 of the airflow amplifier 310 to be entrained by the combined stream 306 (e.g., exhaust flow) from the outlet 316. Such a configuration is referred to as a un-ducted configuration, and this configuration results in higher amplification ratios. In various embodiments, the airflow amplifiers 310 are each mounted to leave gaps between the rim 326 and the exterior surface 317 of the airflow amplifier to allow for this additional airflow entrainment.

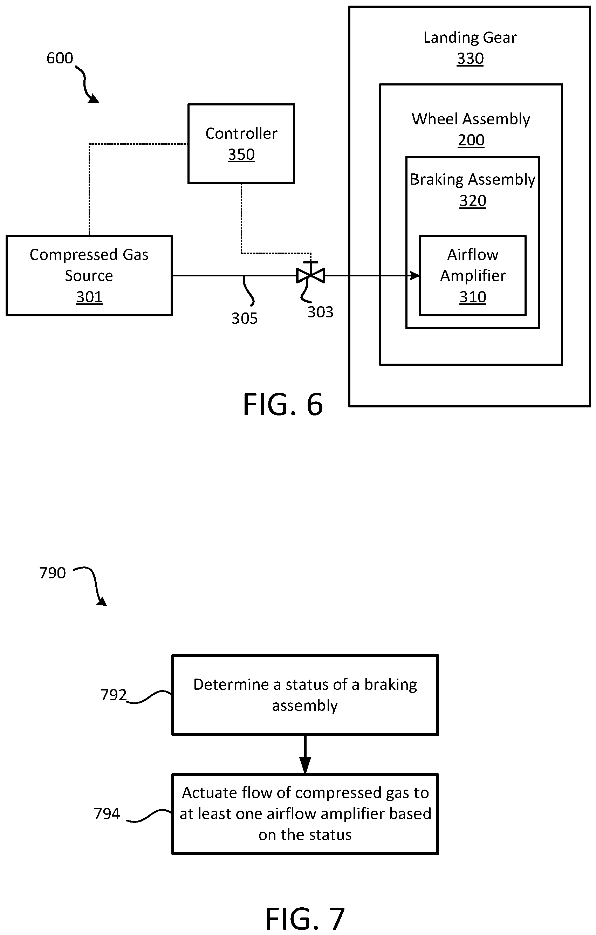

In various embodiments, and with reference to FIG. 6, a schematic block diagram of an aircraft 600 is provided. The aircraft 600, which may be aircraft 100, includes a compressed gas source 301, a controller 350, a landing gear 330, a wheel assembly 200, a braking assembly 320, and a plurality of airflow amplifiers 310. The landing gear 330 may include the wheel assembly 200, and the braking assembly 320 may be operatively coupled to the wheel assembly 200 and may include a plurality of friction disks, as described above. The plurality of airflow amplifiers 310 may be coupled to a rim of a wheel of the wheel assembly 200. The compressed gas source 301 may be coupled/mounted to the landing gear 330, and a conduit 305 may extend from the compressed gas source 301 to the plurality of airflow amplifiers 310. As described above, the plurality of airflow amplifiers 310 may be generally configured to entrain ambient air ("entrained air") in response to compressed gas from the compressed gas source flowing to the airflow amplifier via the conduit, wherein the plurality of airflow amplifiers are configured to direct the entrained air and the compressed gas to the braking assembly to reduce the temperature of the braking assembly.

In various embodiments, the controller 350 is in electronic control communication with at least one of the compressed gas source 301 and/or one or more valves 303 disposed along the conduit to control flow of the compressed gas to the plurality of airflow amplifiers. Generally, the controller 350 is configured to selectively control delivery of the compressed gas to the braking assembly. For example, delivery of the compressed gas to the plurality of airflow amplifiers via the conduit 305 may be actuated in response to determining a status of the braking assembly 320 (e.g., based on input and/or feedback from various sensors or other devices of the aircraft). The status of the braking assembly 320 may pertain to a temperature of the braking assembly, specifically the friction disks. Accordingly, the controller 350 may be configured to determine at least one of an actual status and an expected status of the braking assembly and to actuate the flow of the compressed gas to the plurality of airflow amplifiers in response to at least one of the actual status and the expected status of the braking assembly. For example, the status may be a threshold aircraft speed, a threshold aircraft deceleration, a threshold temperature of the braking assembly, a threshold braking force, and/or an aircraft landing event, according to various embodiments.

The controller 350 may be integrated into computer systems onboard aircraft such as, for example, a brake control unit (BCU), a full authority digital engine control (FADEC), an engine-indicating and crew-alerting system (EICAS), and/or the like. The controller 350 may also be a standalone computer system separate from aircraft and in electronic communication with aircraft, as described in further detail herein. The controller 350 may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof.

In various embodiments, the processor of the controller 350 may be configured to implement various logical operations in response to execution of instructions, for example, instructions stored on the non-transitory memory (e.g., tangible, computer-readable medium). As used herein, the term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

In various embodiments, and with reference to FIG. 7, a method 790 for reducing a temperature of a braking assembly is provided. The method 790 may include determining a status of a braking assembly at step 792 and actuating flow of compressed gas to at least one airflow amplifier based on the determined status at step 794. The status of the braking assembly may generally pertain to a temperature of the friction disks (e.g., a likelihood of oxidation of the friction disks of the braking assembly). Said differently, the determined status of the braking assembly may be a detected, sensed, or calculated condition of the aircraft that is indicative of whether oxidation would occur if not for delivery of the cooling convective flow using the airflow amplifiers.

In various embodiments, determining the status of the braking assembly is performed by a controller of an aircraft control system of the aircraft. In various embodiments, determining the status of the braking assembly comprises determining if an aircraft speed meets a threshold aircraft speed. In various embodiments, determining the status of the braking assembly comprises determining if an aircraft deceleration meets a threshold aircraft deceleration. In various embodiments, determining the status of the braking assembly comprises determining if a temperature of the braking assembly meets a threshold temperature of the braking assembly. In various embodiments, wherein determining the status of the braking assembly comprises determining if a braking force meets a threshold braking force. In various embodiments, determining the status of the braking assembly comprises determining a landing event of the aircraft.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the invention.

The scope of the invention is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present invention.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

## Claims

1. A system for reducing a temperature of a braking assembly, the system comprising:
the braking assembly (320) of a wheel assembly (200), the braking assembly (320) comprising a plurality of friction disks (38);
an airflow amplifier (310) coupled to the wheel assembly (200);
a conduit (305) extending from a compressed gas source to the airflow amplifier;
and **characterized by** further comprising a compressed gas source comprising a solid state material that generates gas via a chemical reaction; and
wherein the airflow amplifier (310) is configured to entrain ambient air in response to compressed gas from the compressed gas source flowing through the airflow amplifier (310) via the conduit (305), wherein the airflow amplifier (310) is configured to direct the entrained air and the compressed gas onto the braking assembly to reduce the temperature of the braking assembly.

2. The system of claim 1, wherein the airflow amplifier (310) is mounted to a rim of a wheel of the wheel assembly (200).

3. The system of claim 2, wherein the airflow amplifier is a first airflow amplifier of a plurality of airflow amplifiers mounted to the rim of the wheel of the wheel assembly (200).

4. The system of claim 3, wherein the plurality of airflow amplifiers are circumferentially distributed around the rim of the wheel of the wheel assembly (200), or further comprising a mounting plate to which the plurality of airflow amplifiers are directly mounted, wherein the mounting plate is mounted to the rim, and optionally wherein the mounting plate comprises radially extending channels that form part of the conduit (305).

5. The system of claim 3, wherein the plurality of airflow amplifiers are coupled to the compressed gas source.

6. The system of claim 5, wherein the conduit (305) extends from a non-rotating structure of the wheel assembly (200) to the rim, wherein the conduit (305) comprises a bearing and dynamic seal at an interface between the non-rotating structure and the rim.

7. The system of any preceding claim, wherein the airflow amplifier comprises an air inlet, a compressed gas inlet, and an outlet.

8. The system of claim 7, wherein the airflow amplifier defines a central chamber extending from the air inlet to the outlet, wherein the compressed gas inlet comprises an annular nozzle for delivering the compressed gas to the central chamber, and wherein the airflow amplifier is coupled to the wheel assembly (200) in such a manner so as to allow additional airflow around an exterior surface of the airflow amplifier to be entrained by exhaust flow from the outlet.

9. The system of any preceding claim, further comprising the compressed gas source, wherein the compressed gas source is mounted to a landing gear for the wheel assembly (200), and optionally wherein the compressed gas source is mounted to an arm of the landing gear.

10. The system of any preceding claim, wherein the airflow amplifier is entirely disposed within a cavity defined by a wheel bay of the wheel assembly (200).

11. An aircraft comprising:
a landing gear comprising a wheel assembly (200);
the system of claim 1, the braking assembly (320) being operatively coupled to the wheel assembly (200) of the landing gear,
comprising:
a plurality of said airflow amplifiers coupled to a rim of a wheel of the wheel assembly (200);
said compressed gas source coupled to the landing gear; and
said conduit (305) extending from the compressed gas source to the plurality of airflow amplifiers;
the air flow amplifier being configured to provide an amplification ratio of between 1:15 and 1:35

12. The aircraft of claim 11, further comprising a controller coupled in electronic control communication with at least one of the compressed gas source and a valve of the conduit (305) to control flow of the compressed gas to the plurality of airflow amplifiers.

13. The aircraft of claim 12 wherein the controller is configured to determine at least one of an actual status and an expected status of the braking assembly and to actuate the flow of the compressed gas to the plurality of airflow amplifiers in response to at least one of the actual status and the expected status of the braking assembly.

14. A method for reducing a temperature of a braking assembly of an aircraft, the method comprising:
determining, by a processor, at least one of an actual status and an expected status of the braking assembly, wherein the actual status and the expected status pertains to the temperature of the braking assembly; and
based on at least one of the actual status and the expected status of the braking assembly, actuating, by the processor, flow of a compressed gas generated by a solid state material via a chemical reaction to at least one airflow amplifier mounted to a rim of a wheel of the aircraft to direct entrained air and the compressed gas onto the braking assembly to reduce the temperature of the braking assembly.

15. The method of claim 14, wherein actuating, by the processor, the flow of the compressed gas comprises maintaining the flow of the compressed gas until the temperature of the braking assembly reaches a predetermined temperature.

## Patentansprüche

1. System zur Reduzierung der Temperatur einer Bremsanordnung, wobei das System Folgendes umfasst:
die Bremsanordnung (320) einer Radanordnung (200), wobei die Bremsanordnung (320) eine Vielzahl von Reibscheiben (38) umfasst;
einen Luftstromverstärker (310), der mit der Radanordnung (200) gekoppelt ist;
eine Leitung (305), die sich von einer Druckgasquelle zu dem Luftstromverstärker erstreckt;
und **dadurch gekennzeichnet, dass** es ferner eine Druckgasquelle umfasst, die einen Feststoff umfasst, der über eine chemische Reaktion Gas erzeugt; und
wobei der Luftstromverstärker (310) dazu konfiguriert ist, Umgebungsluft als Reaktion auf Druckgas aus der Druckgasquelle mitzureißen, das über die Leitung (305) durch den Luftstromverstärker (310) strömt, wobei der Luftstromverstärker (310) dazu konfiguriert ist, die mitgerissene Luft und das Druckgas auf die Bremsbaugruppe zu leiten, um die Temperatur der Bremsbaugruppe zu reduzieren.

2. System nach Anspruch 1, wobei der Luftstromverstärker (310) an einer Felge eines Rades der Radanordnung (200) montiert ist.

3. System nach Anspruch 2, wobei der Luftstromverstärker ein erster Luftstromverstärker einer Vielzahl von Luftstromverstärkern ist, die an der Felge des Rades der Radanordnung (200) montiert sind.

4. System nach Anspruch 3, wobei die Vielzahl von Luftstromverstärkern in Umfangsrichtung um die Felge des Rades der Radanordnung (200) verteilt ist, oder ferner umfassend eine Montageplatte, an der die Vielzahl von Luftstromverstärkern direkt montiert ist, wobei die Montageplatte an der Felge montiert ist und wobei die Montageplatte optional sich radial erstreckende Kanäle umfasst, die einen Teil der Leitung (305) bilden.

5. System nach Anspruch 3, wobei die Vielzahl von Luftstromverstärkern mit der Druckgasquelle gekoppelt ist.

6. System nach Anspruch 5, wobei sich die Leitung (305) von einer nichtdrehenden Struktur der Radbaugruppe (200) zu der Felge erstreckt, wobei die Leitung (305) ein Lager und eine dynamische Dichtung an einer Schnittstelle zwischen der nichtdrehenden Struktur und der Felge umfasst.

7. System nach einem der vorhergehenden Ansprüche, wobei der Luftstromverstärker einen Lufteinlass, einen Druckgaseinlass und einen Auslass umfasst.

8. System nach Anspruch 7, wobei der Luftstromverstärker eine zentrale Kammer definiert, die sich von dem Lufteinlass zu dem Auslass erstreckt, wobei der Druckgaseinlass eine ringförmige Düse zum Einleiten des Druckgases in die zentrale Kammer umfasst und wobei der Luftstromverstärker mit der Radanordnung (200) in einer derartigen Weise gekoppelt ist, dass ermöglicht wird, dass ein zusätzlicher Luftstrom durch den Abgasstrom aus dem Auslass um eine Außenfläche des Luftstromverstärkers herum mitgerissen wird.

9. System nach einem der vorhergehenden Ansprüche, ferner umfassend die Druckgasquelle, wobei die Druckgasquelle an einem Fahrwerk für die Radanordnung (200) montiert ist und wobei die Druckgasquelle optional an einem Arm des Fahrwerks montiert ist.

10. System nach einem der vorhergehenden Ansprüche, wobei der Luftstromverstärker vollständig in einem Hohlraum angeordnet ist, der durch ein Radhaus der Radbaugruppe (200) definiert ist.

11. Flugzeug, umfassend:
ein Fahrwerk, das eine Radanordnung (200) umfasst;
das System nach Anspruch 1, wobei die Bremsanordnung (320) mit der Radanordnung (200) des Fahrwerks wirkgekoppelt ist,
umfassend:
eine Vielzahl der Luftstromverstärker, die mit einer Felge eines Rades der Radanordnung (200) gekoppelt ist;
die Druckgasquelle, die mit dem Fahrwerk gekoppelt ist; und
die Leitung (305), die sich von der Druckgasquelle zu den Luftstromverstärkern erstreckt;
wobei der Luftstromverstärker dazu konfiguriert ist, ein Verstärkungsverhältnis zwischen 1:15 und 1:35 bereitzustellen.

12. Flugzeug nach Anspruch 11, ferner umfassend eine Steuerung, die in elektronischer Steuerverbindung mit mindestens einer der Druckgasquelle und einem Ventil der Leitung (305) gekoppelt ist, um den Strom des Druckgases zu der Vielzahl von Luftstromverstärkern zu steuern.

13. Flugzeug nach Anspruch 12, wobei die Steuerung dazu konfiguriert ist, mindestens eines von einem tatsächlichen Status und einem erwarteten Status der Bremsanordnung zu bestimmen und den Strom des Druckgases zu der Vielzahl von Luftstromverstärkern als Reaktion auf mindestens eines von dem tatsächlichen Status und dem erwarteten Status der Bremsanordnung zu aktivieren.

14. Verfahren zur Reduzierung der Temperatur einer Bremsanordnung eines Flugzeugs, wobei das Verfahren Folgendes umfasst:
Bestimmen von mindestens einem eines tatsächlichen Status und eines erwarteten Status der Bremsanordnung durch einen Prozessor, wobei der tatsächliche Status und der erwartete Status die Temperatur der Bremsanordnung betreffen; und
basierend auf mindestens einem des tatsächlichen Status und des erwarteten Status der Bremsanordnung, Aktivieren, durch den Prozessor, des Stroms eines durch einen Feststoff über eine chemische Reaktion erzeugten Druckgases zu mindestens einem Luftstromverstärker, der an einer Felge eines Rades des Flugzeugs montiert ist, um mitgerissene Luft und das Druckgas auf die Bremsanordnung zu leiten, um die Temperatur der Bremsanordnung zu reduzieren.

15. Verfahren nach Anspruch 14, wobei das Auslösen des Stroms des Druckgases durch den Prozessor Aufrechterhalten des Stroms des Druckgases, bis die Temperatur der Bremsanordnung eine vorbestimmte Temperatur erreicht, umfasst.

## Revendications

1. Système de réduction de la température d'un ensemble de freinage, le système comprenant :
l'ensemble de freinage (320) d'un ensemble de roue (200), l'ensemble de freinage (320) comprenant une pluralité de disques de friction (38) ;
un amplificateur de flux d'air (310) couplé à l'ensemble roue (200) ;
un conduit (305) se prolongeant d'une source de gaz comprimé à l'amplificateur de flux d'air ;
et **caractérisé en ce qu'**il comprend également une source de gaz comprimé comprenant un matériau à l'état solide qui génère du gaz via une réaction chimique ; et
dans lequel l'amplificateur de flux d'air (310) est configuré pour entraîner l'air ambiant en réponse au gaz comprimé depuis la source de gaz comprimé s'écoulant à travers l'amplificateur de flux d'air (310) via le conduit (305), dans lequel l'amplificateur de flux d'air (310) est configuré pour diriger l'air entraîné et le gaz comprimé sur l'ensemble de freinage pour réduire la température de l'ensemble de freinage.

2. Système selon la revendication 1, dans lequel l'amplificateur de flux d'air (310) est monté sur une jante de roue de l'ensemble roue (200).

3. Système selon la revendication 2, dans lequel l'amplificateur de flux d'air est un premier amplificateur de flux d'air d'une pluralité d'amplificateurs de flux d'air montés sur la jante de roue de l'ensemble roue (200).

4. Système selon la revendication 3, dans lequel la pluralité d'amplificateurs de flux d'air sont répartis de manière circonférentielle autour de la jante de la roue de l'ensemble roue (200), ou comprenant également une plaque de montage sur laquelle la pluralité d'amplificateurs de flux d'air sont directement montés, dans lequel la plaque de montage est montée sur la jante, et éventuellement dans lequel la plaque de montage comprend des canaux se prolongeant radialement qui font partie du conduit (305).

5. Système selon la revendication 3, dans lequel la pluralité d'amplificateurs de flux d'air sont couplés à la source de gaz comprimé.

6. Système selon la revendication 5, dans lequel le conduit (305) se prolonge depuis une structure non rotative de l'ensemble roue (200) à la jante, dans lequel le conduit (305) comprend un palier et un joint dynamique au niveau d'une interface entre la structure non rotative et la jante.

7. Système selon une quelconque revendication précédente, dans lequel l'amplificateur de flux d'air comprend une entrée d'air, une entrée de gaz comprimé et une sortie.

8. Système selon la revendication 7, dans lequel l'amplificateur de flux d'air définit une chambre centrale se prolongeant de l'entrée d'air à la sortie, dans lequel l'entrée de gaz comprimé comprend une buse annulaire pour délivrer le gaz comprimé à la chambre centrale, et dans lequel l'amplificateur de flux d'air est couplé à l'ensemble de roue (200) de manière à permettre à un flux d'air supplémentaire autour d'une surface extérieure de l'amplificateur de flux d'air d'être entraîné par le flux d'échappement provenant de la sortie.

9. Système selon une quelconque revendication précédente, comprenant également la source de gaz comprimé, dans lequel la source de gaz comprimé est montée sur un train d'atterrissage pour l'ensemble de roue (200), et éventuellement dans lequel la source de gaz comprimé est montée sur un bras du train d'atterrissage.

10. Système selon une quelconque revendication précédente, dans lequel l'amplificateur de flux d'air est entièrement disposé à l'intérieur d'une cavité définie par un compartiment de roue de l'ensemble de roue (200).

11. Aéronef, comprenant :
un train d'atterrissage comprenant un ensemble roue (200) ; le système selon la revendication 1, l'ensemble de freinage (320) étant couplé de manière fonctionnelle à l'ensemble de roue (200) du train d'atterrissage,
comprenant :
une pluralité desdits amplificateurs de flux d'air couplés à une jante d'une roue de l'ensemble roue (200) ;
ladite source de gaz comprimé couplée au train d'atterrissage ; et
ledit conduit (305) se prolongeant de la source de gaz comprimé à la pluralité d'amplificateurs de flux d'air ;
l'amplificateur de flux d'air étant configuré pour fournir un rapport d'amplification compris entre 1:15 et 1:35

12. Aéronef selon la revendication 11, comprenant également un dispositif de commande couplé en communication de commande électronique avec au moins l'une de la source de gaz comprimé et une vanne du conduit (305) pour contrôler le flux du gaz comprimé vers la pluralité d'amplificateurs de flux d'air.

13. Aéronef selon la revendication 12, dans lequel le dispositif de commande est configuré pour déterminer au moins l'un d'un état réel et d'un état attendu de l'ensemble de freinage et pour actionner le flux de gaz comprimé vers la pluralité d'amplificateurs de flux d'air en réponse à au moins l'un de l'état réel et de l'état attendu de l'ensemble de freinage.

14. Procédé de réduction de la température d'un ensemble de freinage d'un aéronef, le procédé comprenant :
la détermination, par un processeur, au moins l'un d'un état réel et d'un état attendu de l'ensemble de freinage, dans lequel l'état réel et l'état attendu se rapportent à la température de l'ensemble de freinage ; et
sur la base d'au moins l'un de l'état réel et de l'état attendu de l'ensemble de freinage, actionner, par le processeur, le flux d'un gaz comprimé généré par un matériau à l'état solide via une réaction chimique vers au moins un amplificateur de flux d'air monté sur une jante d'une roue de l'aéronef pour diriger l'air entraîné et le gaz comprimé sur l'ensemble de freinage pour réduire la température de l'ensemble de freinage.

15. Procédé selon la revendication 14, dans lequel l'actionnement, par le processeur, du flux de gaz comprimé comprend le maintien du flux de gaz comprimé jusqu'à ce que la température de l'ensemble de freinage atteigne une température prédéterminée.
